## Europäisches Patentamt
## European Patent Office
## Office européen des brevets

(11) Publication number: **0 065 410**

**B1**

(12) **EUROPEAN PATENT SPECIFICATION**

(45) Date of publication of patent specification: **05.09.84**

(51) Int. Cl.³: **C 04 B 31/00,** C 04 B 21/00, C 08 K 7/00

(21) Application number: **82302405.4**

(22) Date of filing: **11.05.82**

(54) Thermally insulating filler and compositions containing such a filler.

(30) Priority: **12.05.81 GB 8114460**

(43) Date of publication of application:
**24.11.82 Bulletin 82/47**

(45) Publication of the grant of the patent:
**05.09.84 Bulletin 84/36**

(84) Designated Contracting States:
**BE DE FR GB IT NL**

(56) References cited:
FR-A- 944 783
FR-A-2 292 684
GB-A- 417 943
US-A-4 110 499

(73) Proprietor: **The British Petroleum Company p.l.c.**
**Britannic House Moor Lane**
**London EC2Y 9BU (GB)**

(72) Inventor: **Simpson, Anthony University of Salford**
**Department of Applied Acoustics Meadow Road Salford, M5 4WT (GB)**
Inventor: **Stukes, Audrey Doris University of Salford**
**Dept. of Applied Acoustics Meadow Road Salford, M5 4WT (GB)**

(74) Representative: **Denbigh, Keith Warwick et al**
**c/o The British Petroleum Company plc Patents Division Chertsey Road**
**Sunbury-on-Thames Middlesex, TW16 7LN (GB)**

Courier Press, Leamington Spa, England.

## Description

The present invention relates to an improved thermally insulating filler and to compositions containing such filler.

More particularly, one aspect of the present invention relates to a thermally insulating filler suitable for use, for example, in the production of insulating concretes, plasters, building board and composites.

Thermal insulants employed, for example, in the building industry fall into several different categories. For example they may be "massive" (i.e. unexpanded) materials such as organic polymers which have a relatively low thermal conductivity; they may be comprised by a layer of gas, e.g. air, enclosed between two or more layers of solid material as used in the familiar cavity wall method of construction; they may comprise structural or decorative materials containing a substantial quantity of gas (normally air) trapped within their structure, for example "Thermalite" blocks, expanded Portland or magnesia cements, or expanded organic resins; or they may comprise composite of a structural material, for example, concrete, plaster, magnesia cement, alumina cement, or an organic resin together with a particulate thermally insulating filler, for example, exfoliated vermiculite, expanded perlite, expanded clays and slate, pumice, expanded pulverised fuel ash (PFA), expanded organic resins or hollow particles of e.g. glass.

It is well known that the thermal insulating properties of building composites, e.g. concrete, containing thermally insulating filler particles are dependent on a variety of factors including the volume/volume concentration of filler in the structural material and the ratio of solid matter:entrained gas (if any) in the filler. However, it is not usually appreciated that the shape of the insulating filler particles can be of considerable importance in determining the insulating properties of the composite.

The present invention provides a thermally insulating filler wherein at least 25% by volume (as hereinafter defined) of the total filler comprises thermally insulating particles having (a) a maximum linear dimension 'X' which is not greater than 100 millimetres, (b) a BS mesh size not less than 38 microns and (c) overall dimensions such that the ratio $A\frac{1}{2}/D$ lies in the range 5/1 to 1000/1 wherein "A" is the area (measured in square millimetres) of the notional plane of greatest cross-section through the particle and "D" is the greatest linear dimension (millimetres) of the particle in the direction perpendicular to said notional plane.

Throughout this specification, the term "volume" as applied to an individual particle (e.g. a filler particle) is defined as the effective space enclosed by the surface of the particle including the volume of any pores within the particle. The term "volume" as applied to particles in bulk is the sum of the volumes of the individual particles excluding the volume of any space between the particles. The volumes of filler particles which do not absorb liquid may be conveniently determined by conventional liquid displacement techniques, e.g. water, oil or mercury displacement. In the case of filler particles which absorb liquids, the volumes can be determined for example by powder displacement or by microscopic techniques. A convenient powder displacement technique involves selecting an inert powder (e.g. silica or chalk) having a fine particle size in relation to the filler material and measuring the volume of the inert powder (e.g. in a measuring cylinder) under standard compaction conditions. The sample of filler is then added, thoroughly shaken with the inert powder and the new volume measured under the standard compaction conditions. The volume of the filler is taken as the difference between the two measured readings. A further technique which can be employed to measure the volume of filler materials is to prepare a standard fine cement formulation and to set weighed samples of the cement with and without filler under standard conditions. The volume of the filler can readily be deduced from the change in density between set cement samples.

Preferably at least 50% and most preferably at least 90% by volume of the total filler comprises thermally insulating particles having the defined dimensional characteristics (a), (b) and (c) hereinbefore recited, the balance (if any) being met, for example, by conventional fillers (which may be thermally insulating if desired), reinforcement or other additives. The thermally insulating particles are preferably of uniform size and shape.

The thermally insulating filler particles of the present invention suitably comprise particles of solid material or expanded solid material, or hollow particles of solid material. The average thermal conductivity of the defined filler particles is preferably not greater than 0.5, most preferably not greater than 0.1 watt metre$^{-1}$ °C$^{-1}$ measured with respect to the individual particles. In the case where the filler particles consist of massive material (i.e. material containing no voids) the thermal conductivity may be measured directly on the massive material, or in the case of some materials may be available by reference to the literature. In the case where the filler particles are inhomogeneous, e.g. comprise mixtures of different materials or contain entrained air or voids the thermal conductivity may be measured directly on each individual particle in a representative sample of the particles or on a sheet or block of material having the same physical and chemical structure, for example a block of material from which the particles are formed. Alternatively, it is possible to calculate the average thermal conductivity of some inhomogeneous particles, for example hollow plastic discs, from knowledge of the geometry of the discs and the thermal conductivity of the plastics material and the contained gas. In the case that the average thermal conductivity of a particle varies with the direction in which it is measured, the term "average thermal conductivity" as used in this specification means the value obtained as measured perpendicular to the notional plane of greatest cross-section.

The thermally insulating filler particles of the present invention are suitably made of, for example, expanded plastics, for example polystyrene, polyurethane, phenolic resin or polyethylene in massive or expanded form; expanded minerals or rocks, for example exfoliated vermiculite or expanded perlite; expanded cements such as expanded Portland cement or expanded magnesia cement; expanded glass, sintered glass or coated glass fibre; or biological materials such as wood, cork or coated vegetable fibre. Preferably the filler material of the present invention is in expanded form or in the form of hollow particles and most preferably such expanded forms are rigid or semi-rigid. It is desirable that the filler material is expanded to the fullest extent reasonably practicable whilst retaining an adequate mechanical strength for its proposed application. Filler particles comprising polymer foams are preferred. Closed-cell polymer foams are particularly preferred.

The present invention requires that at least 25% by volume of the filler particles have a ratio $A\frac{1}{2}/D$ which lies in the range 5/1 to 1000/1. It is preferred that the ratio lies in the range 10/1 to 1000/1. The maximum linear dimension "X" is preferably not greater than 25 millimetres. Most preferably "X" lies in the range 1—10 millimetres. Examples of shapes of particles which can fall within the recited mathematical definition are planar or dished discs, buttons, platelets or lamellae; oblate spheroids or any generally planar geometrical shapes, e.g. flat squares or triangles.

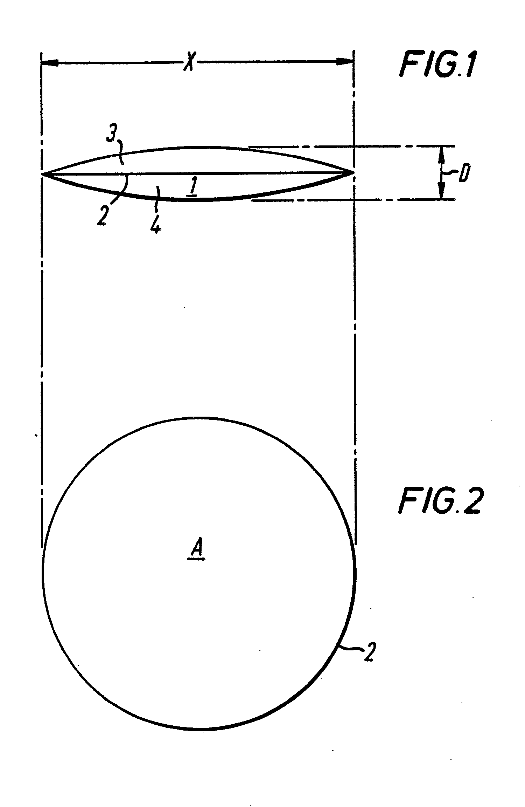

The dimensions "X" and "D" and the area "A" can conveniently be determined by standard optical microscopy and/or electron microscopy. Figures 1 and 2 of the accompanying drawings diagrammatically illustrate on an enlarged scale an example of a filler particle according to the present invention showing the dimensions "X" and "D" and the area "A". Figure 1 is a cross sectional view and Figure 2 is a plan view of the particle. In this case the notional plane of greatest cross section 2 "bisects" the particle into two equal segments 3, 4. For most particles it will be observed that "X" will tend to lie in the same plane, or nearly the same plane, as "A". For example, for a particle having the shape of a flat rectangular sheet, "D" will be approximately the thickness of the sheet, "A" will be approximetely the area of the sheet and "X" will be approximately the diagonal of the rectangle.

Examples of filler particles according to the present invention comprise discs of expanded plastics material, hollow particles, for example hollow oblate spheroids of thermoplastics, lamellae of exfoliated vermiculite or buttons of coated glass fibre.

The filler particles of the present invention may be manufactured by a variety of techniques. For example, discs of expanded plastics material may conveniently be stamped from a sheet by mechanical means. Hollow oblate spheroids of thermoplastics may be made for example by heat sealing blisters between two sheets of thermoplastics film and stamping out the blisters. Lamellae of exfoliated vermiculite may be manufactured by a cleaving process. Buttons or discs of coated glass fibre may be made, for example, by stamping a web of glass fibre wadding to form discs or buttons and then treating the surfaces thereof with a layer of sealant, for example, by dipping or spraying. Suitable sealants are, for example, sodium silicate or settable synthetic resins. It is also advantageous to seal the surface of absorbent filler particles, for example, lamellae of exfoliated vermiculite, against the absorption of water or other material which reduce the thermal insulation properties of the material. The sealing may be achieved, for example, by treating the material with settable resin, sodium silicate or silicone compounds. This type of process is described for example in UK Patent Specification No. 790636.

The present invention further provides a curable composition comprising a mixture of

(I) a thermally insulating filler comprising thermally insulating particles having (a) a maximum linear dimension "X" which is not greater than 100 millimetres, (b) a BS mesh size not less than 38 microns and (c) overall dimensions such that the ratio $A\frac{1}{2}/D$ lies in the range 5/1 to 1000/1 wherein "A" is the area (measured in square millimetres) of the notional plane of greatest cross-section through the particle and "D" is the greatest linear dimension (millimetres) of the particle in the direction perpendicular to said notional plane,

(II) a curable cement or resin and optionally

(III) additional filler, aggregate, reinforcement or other additives used in making cured cement or resin compositions.

The curable composition of the present invention suitably comprises 10 to 99% by volume, preferably 40—90% by volume of the defined thermally insulating particles, the volume % being based on the volume (as hereinbefore defined) of the total composition.

The curable cement or resin employed in the curable composition can be, for example, conventional Portland, lime, alumina or magnesia cement, or synthetic or natural curable resins, for example polyester resin, epoxy resin, polyurethane resin, phenolic resin or curable liquid rubber.

The quantity of curable cement or resin present in the curable composition of the present invention is suitably 90—1% by volume, preferably 60—5% by volume, based on the volume (as herein defined) of the total composition.

Additional fillers (e.g. thermally insulating or otherwise), aggregates or reinforcement which can optionally be present in the composition are suitably selected from the large variety of such materials conventionally employed in the building and plastics fabrication industries. Examples of such fillers, aggregates or reinforcement are sand, chalk, pebbles, rock chippings, glass chippings, mica, talc, glass fibre, carbon fibre, metal fibre, vegetable fibre and metal or plastics shaped-reinforcement.

The curable composition may also contain other conventional additives, for example, pigments, accelerators, fire retardants, inhibitors, fungicides, water-proofing agents or process aids.

Use of the thermally insulating filler having particles of the defined shape as required in the present invention in the manufacture of composite materials, for example concrete or filled plastics material, leads to the production of a composite material having improved thermal insulating properties by comparison with conventional fillers having randomly shaped particles.

Use of the thermally insulating filler of the present invention in the production of conventional concrete mixes can advantageously be employed to improve the thermal insulation of, for example, screeds or panels of a given thickness, or alternatively the thickness (and hence the weight) of a screed or panel may be reduced to a significant extent whilst still retaining good thermal insulation properties.

This invention is further illustrated with reference to the following Example which employs filler material in accordance with the present invention and Test which is by way of comparison.

Example

Platelets of exfoliated vermiculite were prepared by cleaving granular vermiculite. The platelets were typically 0.5 mm thick, had a mean ratio $A^{\frac{1}{2}}/D$ of 14/1 and were greater than BS mesh 38 microns. They were incorporated in fairly random orientation at a variety of different volume concentrations in cement mixes of 1 part Portland cement to 1—2 parts water; the proportion of water increasing with the quantity of vermiculite used.

Test

The same Portland cement/water mixes were used as in the Example, but normal, medium grade (2—4 mm) granules of exfoliated vermiculate having ratios $A^{\frac{1}{2}}/D$ of approximately 1/1 to 2/1, BS mesh greater than 38 microns replaced the cleaved vermiculite used in the Example.

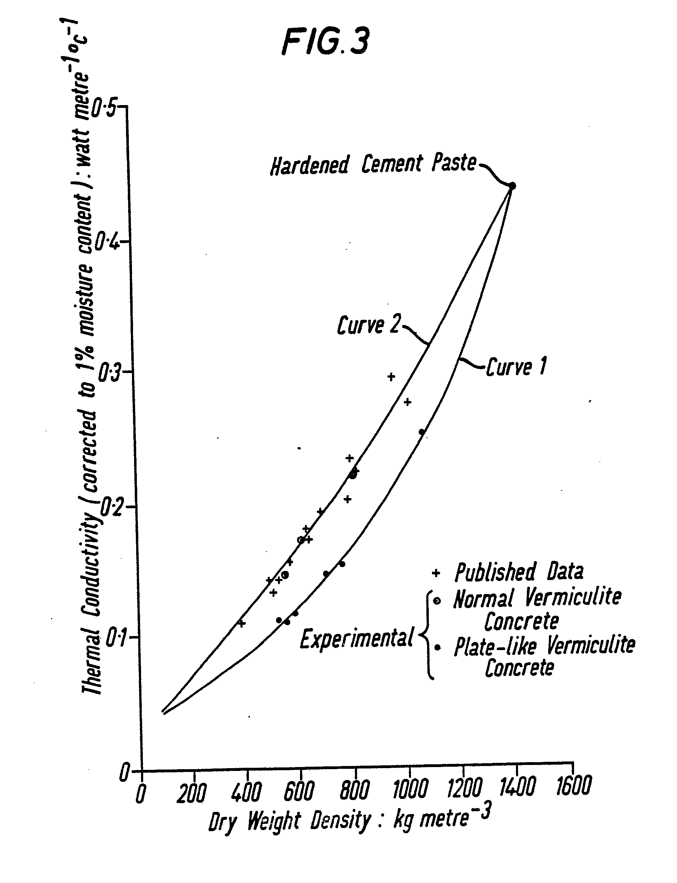

Suitable specimens, of both types and having densities in the range 500—1000 kg/m³, were prepared for thermal conductivity measurements. The results (corrected to 1% moisture content) are summarised in Figure 3 together with those published for normal vermiculite concrete (Thermal conductivity of Masonry Materials, Pamela Arnold BRS Current Papers January 1970. Specimens of the type described in the Test were used for control purposes and to compare with published data, as can be seen from Figure 3. The specimens with plate-like vermiculite according to the present invention, over the density range investigated, (see curve 1) show a significant reduction in thermal conductivity of 25 to 30% compared to those for normal vermiculite (see curve 2).

A further aspect of the present invention provides a cured cellular body comprising a cured body of resin or cement having a plurality of voids therein, at least 25%, preferably 40—100% by space volume (as hereinafter defined) of the voids having (a) a maximum linear dimension not greater than 100 millimetres, preferably not greater than 25 millimetres, (b) overall dimensions such that the ratio $B^{\frac{1}{2}}/E$ lies in the range 5/1 to 1000/1, preferably 10/1 to 1000/1, wherein "B" is the area (measured in square millimetres) of the notional plane of greatest cross-section of the void and E is the greatest linear dimension (millimetres) of the void in a direction perpendicular to said notional plane and (c) E not greater than 4 mm, preferably not greater than 2 mm, and not less than 38 microns, preferably not less than 100 microns.

By "space volume" is meant the sum of volumes of the individual voids within the cured body.

Suitably the space volume of the voids present in the cured cellular body occupies 10—99%, preferably 40—90% by volume of the total volume of the cellular body.

The cured cellular body of the present invention can be fabricated, for example, by curing a composition comprising a mixture of curable cement or resin and expanded particles of a thermoplastic resin having a particle size and shape approximately equal to the size and shape of the desired voids. The voids are then formed by subjecting the cured cement or resin to heat or solvent treatment to cause breakdown (e.g. by melting or dissolution) of the expanded particles. Alternatively, the cured cellular body of the present invention may be formed by curing a composition comprising a mixture of curable cement or resin and inflated blisters of, for example, thermoplastics or glass having a particle size and shape approximately equal to the size and shape of the desired voids.

Claims

1. A thermally insulating filler wherein at least 25% by volume (as hereinbefore defined) of the total filler comprises thermally insulating filler particles having:

(a) a maximum linear dimension "X" which is not greater than 100 millimetres,
(b) a BS mesh size not less than 38 microns and,
(c) overall dimensions such that the ratio $A^{\frac{1}{2}}/D$ lies in the range 5/1 to 1000/1 wherein "A" is the area (measured in square millimetres) of the notional plane of greatest cross-section through the particle and "D" is the greatest linear dimension (millimetres) of the particle in the direction perpendicular to said notional plane.

2. A thermally insulating filler as claimed in claim 1 wherein at least 90% by volume of the total filler comprises thermally insulating filler particles having the defined characteristics.

3. A thermally insulating filler as claimed in claim 1 or 2 wherein the defined filler particles have an average thermal conductivity not greater than 0.5 watt metre$^{-1}$ °C$^{-1}$ measured with respect to the individual particles.

4. A thermally insulating filler as claimed in any one of the preceding claims wherein the ratio $A^{\frac{1}{2}}/D$ of the defined particles lies in the range 10/1 to 1000/1.

5. A thermally insulating filler as claimed in any one of the preceding claims wherein the maximum linear dimension "X" of the defined particles is not greater than 25 millimetres.

6. A thermally insulating filler as claimed in any one of the preceding claims wherein the defined particles are planar discs or platelets.

7. A thermally insulating filler as claimed in any one of the preceding claims wherein the defined particles are fabricated from expanded plastics or expanded mineral.

8. A curable composition comprising a mixture of:

(I) a thermally insulating filler comprising thermally insulating particles having (a) a maximum linear dimension "X" which is not greater than 100 millimetres, (b) a BS mesh size not less than 38 microns and (c) overall dimensions such that the ratio $A^{\frac{1}{2}}/D$ lies in the range 5/1 to 1000/1 wherein "A" is the area (measured in square millimetres) of the notional plane of greatest cross-section through the particle and "D" is the greatest linear dimension (millimetres) of the particle in the direction perpendicular to said notional plane,
(II) a curable cement or resin and optionally
(III) additional filler, aggregate, reinforcement or other additives used in making cured cement or resin compositions.

9. A curable composition as claimed in claim 8 wherein the defined filler particles (I) represent 10—99% by volume of the total composition.

10. A composition as claimed in claim 8 or 9 wherein the quantity of curable cement or resin present in the composition is 60—65% by volume based on the volume of the total composition.

11. A cured cellular body comprising a cured body of resin or cement having a plurality of voids therein, at least 25%, preferably 40—100% by space volume (as hereinbefore defined) of the voids having (a) a maximum linear dimension not greater than 100 millimetres, preferably not greater than 25 millimetres, (b) overall dimensions such that the ratio $B^{\frac{1}{2}}/E$ lies in the range 5/1 to 1000/1, preferably 10/1 to 1000/1, wherein "B" is in the area (measured in square millimetres) of the notional plane of greatest cross-section of the void and E is the greatest linear dimension (millimetres) of the void in a direction perpendicular to said notional plane and (c) E not greater than 4 mm, preferably not greater than 2 mm, and not less than 38 microns, preferably not less than 100 microns.

12. A cured cellular body as claimed in claim 11 wherein the space volume of the voids occupies 10—99% by volume of the total volume of the cellular body.

13. A process for manufacturing the cured cellular body claimed in claim 11 or 12 comprising curing a composition comprising a mixture of curable cement or resin and expanded particles of a thermoplastic resin having a particle size and shape substantially the same as the size and shape of the desired voids and subjecting the cured composition to heat treatment or solvent treatment to cause breakdown of the expanded particles to leave the desired voids.

**Patentansprüche**

1. Thermisch isolierender Füllstoff, bei dem mindestens 25 Vol. % (wie hier vorher definiert) des gesamten Füllstoffs thermisch isolierende Füllstoffteilchen umfassen, die

(a) eine maximale lineare Abmessung "X", die nicht größer als 100 mm ist,
(b) eine BS-Maschenweite von nicht weniger als 38 Mikron und
(c) derartige Gesamtabmessungen, daß das Verhältnis $A^{\frac{1}{2}}/D$ im Bereich von 5/1 bis 1000/1 liegt, wobei A die Fläche (gemessen in mm²) der gedachten Ebene des größten Querschnitts durch das Teilchen ist und "D" die größte lineare Abmessung (mm) des Teilchens in senkrechter Richtung zur besagten gedachten Ebene bedeutet,
besitzen.

2. Thermisch isolierender Füllstoff nach Anspruch 1, wobei mindestens 90 Vol. % des gesamten Füllstoffs thermisch isolierende Füllstoffteilchen mit den definierten Eigenschaften umfassen.

3. Thermisch isolierender Füllstoff nach einem der Ansprüche 1 oder 2, wobei die definierten Füllstoffteilchen eine mittlere thermische Leitfähigkeit von nicht mehr als 0,5 Watt Meter$^{-1}$ °C$^{-1}$, gemessen in Bezug auf die einzelnen Teilchen, besitzen.

4. Thermisch isolierender Füllstoff nach einem der vorangehenden Ansprüche, wobei das Verhältnis A$\frac{1}{2}$/D der definierten Teilchen im Bereich von 10/1 bis 1000/1 liegt.

5. Thermisch isolierender Füllstoff nach einem der vorangehenden Ansprüche, wobei die maximale lineare Abmessung "X" der definierten Teilchen nicht größer als 25 mm ist.

6. Thermisch isolierender Füllstoff nach einem der vorangehenden Ansprüche, wobei die definierten Teilchen planare Scheiben oder Plättchen sind.

7. Thermisch isolierender Füllstoff nach einem der vorangehenden Ansprüche, wobei die definierten Teilchen aus verschäumtem Kunststoff oder verschäumtem Mineralstoff hergestellt sind.

8. Eine härtbare Zusammensetzung, umfassend ein Gemisch aus:

(I) einem thermisch isolierenden Füllstoff, welcher thermisch isolierende Teilchen, umfaßt, die

(a) eine maximale lineare Abmessung "X", die nicht größer als 100 mm ist,

(b) eine BS-Maschenweite von nicht weniger als 38 Mikron und

(c) derartige Gesamtabmessungen, daß das Verhältnis A$\frac{1}{2}$/D im Bereich von 5/1 bis 1000/1 liegt, wobei A die Fläche (gemessen in mm²) der gedachten Ebene des größten Querschnitts durch das Teilchen ist und "D" die größte lineare Abmessung (mm) des Teilchens in senkrechter Richtung zur besagten gedachten Ebene bedeutet, besitzen.

(II) einem härtbaren Zement oder Harz und gegebenenfalls

(III) zusätzlichem Füllstoff, Zuschlagstoff, Verstärkungsmaterial oder anderen Zusätzen, die bei der Herstellung von gehärteten Zement-oder Harzzusammensetzungen verwendet werden.

9. Eine härtbare Zusammensetzung nach Anspruch 8, wobei die definierten Füllstoffteilchen (I) 10—99 Vol. % der gesamten Zusammensetzung ausmachen.

10. Eine Zusammensetzung nach Anspruch 8 oder 9, wobei die Menge an härtbaren Zement oder Harz, die in der Zusammensetzung vorhanden ist, 60—65 Vol. %, bezogen auf das Volumen der gesamten Zusammensetzung, beträgt.

11. Ein gehärteter, zellförmiger Körper, der einen gehärteten Körper aus Harz oder Zement umfaßt und eine Vielzahl von Hohlräumen aufweist, wobei mindestens 25%, vorzugsweise 40—100%, des Raumvolumens (wie hier vorher definiert) der Hohlräume (a) eine maximale lineare Abmessung von nicht mehr als 100 mm, vorzugsweise von nicht mehr als 25 mm, (b) derartige Gesamtabmessungen, daß das Verhältnis B$\frac{1}{2}$/E im Bereich von 5/1 bis 1000/1, vorzugsweise 10/1 bis 1000/1, liegt, wobei "B" die Fläche (gemessen in mm²) der gedachten Ebene des größten Querschnitts des Hohlraums ist und E die größte lineare Abmessung (mm) des Hohlraums in senkrechter Richtung zur besagten gedachten Ebene bedeutet und (c) E, das nicht größer als 4 mm, vorzugsweise nicht größer als 2 mm, und nicht kleiner als 38 Mikron, vorzugsweise nicht kleiner 100 Mikron ist, besitzen.

12. Ein gehärteter, zellförmiger Körper nach Anspruch 11, bei dem das Raumvolumen der Hohlräume 10—99 Vol. % des gesamten Volumens des zellförmigen Körpers einnimmt.

13. Verfahren zur Herstellung des gehärteten, zellförmigen Körpers nach Anspruch 11 oder 12, bei welchem man eine Zusammensetzung aushärtet, die eine Mischung aus härtbarem Zement oder Harz und verschäumten Teilchen eines thermoplastischen Harzes mit im wesentlichen gleicher Teilchengröße und Form wie die Größe und Form der gewünschten Hohlräume umfaßt und diese gehärtete Zusammensetzung einer Wärme- oder Lösungsmittelbehandlung unterwirft, um ein Zusammenbrechen der verschäumten Teilchen zu verursachen, wobei die gewünschten Hohlräume hinterlassen werden.

## Revendications

1. Charge d'isolation thermique, dans laquelle au moins 25 % en volume (tel que défini précédemment) de la charge totale comporte des particules de charge d'isolation thermique ayant:

(a) une dimension linéaire maximale "X" qui ne dépasse pas 100 mm,

(b) une dimension granulomtrique BS qui n'est pas inférieure à 38 microns et

(c) des dimensions globales telles que le rapport A$\frac{1}{2}$/D est compris entre 5/1 et 1000/1, "A" étant la surface (mesurée en mm²) du plan imaginaire de plus grande section passant par la particule et "D" étant la plus grande dimension linéaire (en mm) de la particule en direction perpendiculaire audit plan imaginaire.

2. Charge d'isolation thermique selon la revendication 1 dans laquelle 90 % du volume au moins de la charge totale est formé de particules de charge d'isolation thermique ayant les caractéristiques définies.

3. Charge d'isolation thermique selon l'une des revendications 1 et 2, dans laquelle les particules définies de charge ont une conductibilité thermique moyenne qui ne dépasse pas 0,5 W/m. °C, mesurée pour les particules individuelles.

4. Charge d'isolation thermique selon l'une quelconque des revendications précédentes, dans laquelle le rapport $A\frac{1}{2}/D$ des particules définies est compris entre 10/1 et 1000/1.

5. Charge d'isolation thermique selon l'une quelconque des revendications précédentes, dans laquelle la dimension linéaire maximale "X" des particules définies ne dépasse pas 25 mm.

6. Charge d'isolation thermique selon l'une quelconque des revendications précédente, dans laquelle les particules définies sont des disques plats ou des plaquettes.

7. Charge d'isolation thermique selon l'une quelconque des revendications précédentes, dans laquelle les particules définies sont fabriquées à partir d'une matière plastique expansée ou d'une matière minérale expansée.

8. Composition durcissable, comprenant un mélange de

(I) une charge d'isolation thermique contenant des particules d'isolation thermique ayant (a) une dimension linéaire maximale "X" qui ne dépasse pas 100 mm, (b) une dimension granulométrique BS qui n'est pas inférieure à 38 microns, et (c) des dimensions globales telles que le rapport $A\frac{1}{2}/D$ est compris entre 5/1 et 1000/1, "A" étant la surface (mesurée en mm²) du plan imaginaire de plus grande section passant dans la particule et "D" étant la plus grande dimension linéaire (en mm) de la particule en direction perpendiculaire au plan imaginaire,

(II) une résine ou un ciment durcissable et, éventuellement,

(III) une charge supplémentaire, un agrégat, un agent d'armature ou d'autres adjuvants utilisés pour la fabrication des compositions de ciment ou de résine durcies.

9. Composition durcissable selon la revendication 8, dans laquelle les particules définies de charge (I) représentent 10 à 99 % en volume de la composition totale.

10. Composition selon l'une des revendications 8 et 9, dans laquelle la quantité de résine ou de coment durcissable présente dans la composition est comprise entre 60 et 65 % du volume de la composition totale.

11. Corps cellulaire durci, comprenant un corps durci d'une résine ou d'un ciment, ayant des cavités à l'intérieur, au moins 25 % et de préférence 40 à 100 % du volume spatial (tel que défini précédemment) des cavités ayant (a) une dimension linéaire maximale ne dépassant pas 100 mm, de préférence ne dépassant pas 25 mm, (b) des dimensions globales telles que le rapport $B\frac{1}{2}/E$ est compris entre 5/1 et 1000/1, de préférence entre 10/1 et 100/1, "B" étant la surface (mesurée en mm²) du plan imaginaire de la plus grande section de la cavité et E étant la plus grande dimension linéaire (en mm) de la cavité dans une direction perpendiculaire au plan imaginaire, et (c) E n'est pas supérieur à 4 mm et de préférence à 2 mm, et n'est pas inférieur à 38 microns et de préférence à 100 microns.

12. Corps cellulaire durci selon la revendication 11, dans lequel le volume spatial des cavités occupe 10 à 99 % du volume total du corps cellulaire.

13. Procédé de fabrication du corps cellulaire durci selon l'une des revendications 11 et 12, comprenant le durcissement d'une composition contenant un mélange d'une résine ou d'un ciment durcissable et de particules expansées d'une résine thermoplastique ayant une configuration et une dimension particulaires sensiblement identiques à la configuration et à la dimension des cavités voulues, et le traitement de la composition durcie, par la chaleur ou par un solvant, afin que les particules expansées soient brisées et laissent les cavités voulues.

FIG.1

FIG.2

0 065 410

# FIG.3